# EUROPEAN PATENT APPLICATION

(11) **EP 4 471 656 A1**
(43) Date of publication of application: **04.12.2024**
(21) Application number: 23176469.7
(22) Date of filing: 31.05.2023
(51) Int. Cl.: G06F 30/3947, H05K 1/00, B64C 1/06, B64F 5/00, H05K 1/02, G06F 113/16, G06F 113/24, G06F 113/26, G06F 113/28, G06F 115/12, G06F 119/18

(54) **MODULAR FUNCTIONALIZED COVER PANELS**

(71) Applicant: Airbus Operations GmbH, 21129 Hamburg (DE)
(72) Inventor: Brückmann, Konstantin, 21129 Hamburg (DE); Hahn, Dennis, 21129 Hamburg (DE); Nitsche, Maximilian, 21129 Hamburg (DE)

(57) **Abstract**

The present disclosure relates to a method for generating, according to an input specification, a layout of a laminated panel comprising a first layer providing a cover function, a second layer providing a support function and a third layer providing a routing function. The method comprises the steps of selecting a mounting surface to be equipped with at least one electrical function, wherein the first layer is a part of the mounting surface, superimposing, onto the selected mounting surface, a grid signifying at least one virtual interface and at least one virtual constraint for the at least one electrical function, receiving the input specification to select and place the at least one electrical function on the superimposed grid, transferring the at least one selected and placed electrical function into one or more modules to be placed on the grid, connecting the one or more modules with the routing function, and generating the layout comprising manufacturing specifications for the first, second and third layers. The present disclosure further relates to a computer-readable medium, a laminated panel, an apparatus and a system.

## Description

### Technical Field

The present disclosure generally relates to a method for generating a layout of a laminated panel (comprising e.g. modular functionalized cover panels). In particular, the present disclosure relates to a method for generating a layout of a laminated panel in the context of cabin/cargo electronics as well as printed electronics for power and data transfer. The present disclosure can be applied to multiple sorts of surfaces, such as to cabin/cargo electronics or civil/military aviation, but also other use cases are feasible, such as automotive, public transport etc.

In addition, the present disclosure also relates to a computer-readable medium, a laminated panel, an apparatus and a system corresponding to the method.

### Background

Currently, there are solutions available on the market for so-called "in-mold electronics" (meaning electronics to be directly integrated into covers/mounting surfaces), such as appliances' displays or automotive applications, that have a similar outward appearance from a consumer's point of view. However, with regard to the internal architecture, currently there are no replaceable modules with in-mold technology.

### Summary

Accordingly, there is a need for an implementation of a scheme that avoids one or more of the problems discussed above, or other related problems.

Without loss of generality, the present disclosure can be summarized as follows. The present disclosure provides a laminated panel (lining part) with 3 layers and integrated modules with electrical functions in customized layouts and properties: a design/decor surface at the front as the interface to the consumer, a reinforced foam panel as core structure and a routing layer at the back for power and data provision. A grid will divide each lining part for customization. At said locations (placed in said grid), respecting the structural and electrical interface constraints, in the panel there are cut-outs in which the respective modules can be mounted. Modules can be variable in size and functionality to accommodate customer demands. Each electrical function will be manufactured in one or more standardized modules. Said modules clip into position in the structure panel from the back with their frame and e.g. a foil-to-foil connector establishes the electric connection to the power and data routing foil. Functionalities can be e.g. lights (LEDs), sensors (temperature, proximity, gesture, humidity, etc.), microcontrollers, etc. Said panel is then installed to a carrier structure and connected to a power and data distribution network.

In addition, the present disclosure enables the following advantages:
- The modular architecture enables maximum design liberty while reducing the cost of customization, manufacturing, installation, maintenance and repair.
- Functionalizing almost every surface becomes possible, even outside aircraft industry (such as use cases pertaining to the automotive, public transport, or appliances sector and the like).
- The present disclosure can also reduce the weight of existing functionalities in various applications, e.g. in a monument sidewall (e.g., galley sidewall, lavatory sidewall, partition wall, etc.).

In a first aspect to better understand the present disclosure, there is provided a method for generating, according to an input specification, a layout of a laminated panel comprising a first layer providing a cover function, a second layer providing a support function and a third layer providing a routing function. The method comprises the steps of selecting a mounting surface to be equipped with at least one electrical function, wherein the first layer is a part of the mounting surface, superimposing, onto the selected mounting surface, a grid signifying at least one virtual interface and at least one virtual constraint for the at least one electrical function, receiving the input specification to select and place the at least one electrical function on the superimposed grid, transferring the at least one selected and placed electrical function into one or more modules to be placed on the grid, connecting the one or more modules with the routing function, and generating the layout comprising manufacturing specifications for the first, second and third layers.

In a first refinement of the first aspect, the transferring step preferably further comprises checking the selected and placed electrical function for structure and consistency. Further, the at least one virtual interface preferably relates to at least one physical interface, and the at least one virtual constraint preferably relates to physical areas unsuitable for the at least one electrical function. In addition, the at least one electrical function preferably relates to at least one of a light, a sensor and an antenna. Moreover, the mounting surface preferably is a ceiling panel, most preferably in an aircraft.

In a second refinement of the first aspect, the routing function preferably pertains to power tracks and data tracks to connect the one or more modules. In this regard, in the generating step, the layout for the third layer preferably is generated according to the power tracks and data tracks. Still further, in the generating step, the layout for the second layer is preferably generated involving cut-outs for the at least one or more modules.

In a third refinement of the first aspect, the method preferably is further for manufacturing the laminated panel and the method preferably further comprises the step of manufacturing the laminated panel according to the manufacturing specifications .

In a second aspect to better understand the present disclosure, there is provided a computer-readable medium comprising code portions which, when executed on a processor, configure the processor to perform the steps of a method according to the first aspect.

In a third aspect to better understand the present disclosure, there is provided a laminated panel, comprising a first layer providing cover function, wherein the first layer is a part of a mounting surface to be equipped, a second layer providing cut-outs to support one or more modules, and a third layer providing power tracks and data tracks to connect the one or more modules, wherein the laminated panel was manufactured by a method according to the second and third refinements of the first aspect.

As a refinement of the third aspect, the second layer preferably is comprised of a reinforced foam layer. Moreover, each of the one or more modules is preferably equipped with a frame to be mounted in the cut-outs of the second layer, and a connector to establish an electrical connection to the power tracks and data tracks of the second layer.

In a fourth aspect to better understand the present disclosure, there is provided an apparatus for generating, according to an input specification, a layout of a laminated panel comprising a first layer providing a cover function, a second layer providing a support function and a third layer providing a routing function, the apparatus being configured to perform all steps of a method according to the first aspect (not including the third refinement of the first aspect).

In a fifth aspect to better understand the present disclosure, there is provided a system for manufacturing, according to an input specification, a laminated panel comprising a first layer providing a cover function, a second layer providing a support function and a third layer providing a routing function. The system comprises an apparatus according to the fourth aspect and a manufacturing facility for manufacturing the laminated panel, the manufacturing facility being configured to perform the method of the third refinement of the first aspect.

### Brief Description of the Drawings

The embodiments of the technique presented herein are described below with reference to the accompanying drawings, in which:
Fig. 1A shows a schematic drawing of a system, an apparatus, a manufacturing facility, a computer-readable medium and a first step and a second step of a method according to the present disclosure;
Fig. 1B shows a schematic drawing of the system, the apparatus, the manufacturing facility, the computer-readable medium and a third step and a fourth step of the method according to the present disclosure;
Fig. 1C shows a schematic drawing of the system, the apparatus, the manufacturing facility, the computer-readable medium and a fifth step and a sixth step of the method according to the present disclosure; and
Fig. 2 shows a schematic drawing of a laminated panel, the system, the apparatus, the manufacturing facility, the computer-readable medium and a seventh step of the method according to the present disclosure.

### Detailed Description

In the following description, for purposes of explanation and not limitation, specific details are set forth in order to provide a thorough understanding of the technique presented herein. It will be apparent to one skilled in the art that the present technique may be practiced in other embodiments that depart from these specific details.

Moreover, those skilled in the art will appreciate that the services, functions and steps explained herein may be implemented using software functioning in conjunction with a programmed microprocessor, or using an Application Specific Integrated Circuit (ASIC), a Digital Signal Processor (DSP) or general purpose computer. It will also be appreciated that while the following embodiments are described in the context of methods and devices, the technique presented herein may also be embodied in a computer program product as well as in a system comprising a computer processor and a memory coupled to the processor, wherein the memory is encoded with one or more programs that execute the services, functions and steps disclosed herein. This applies especially to the second aspect of the computer-readable medium.

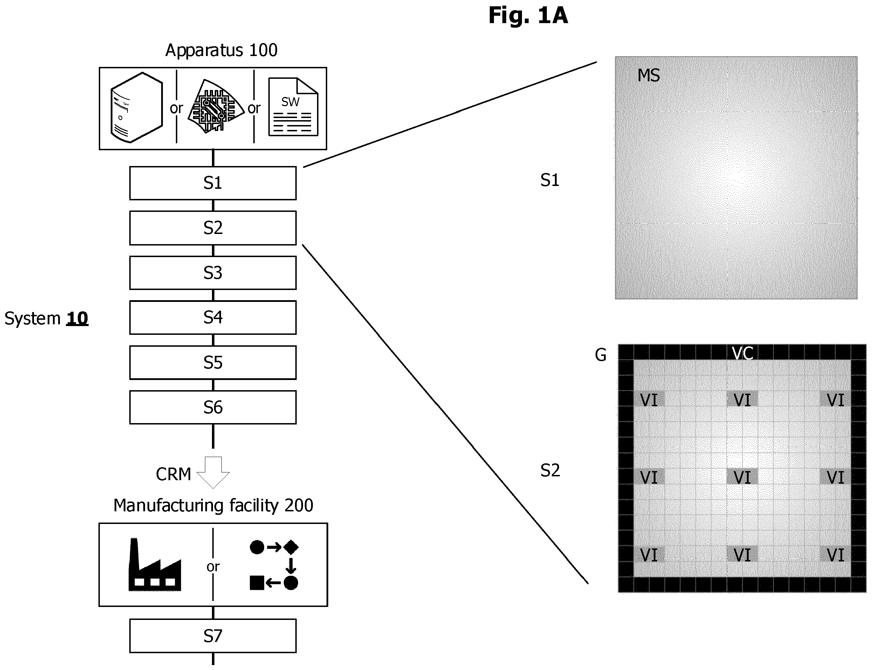

Fig. 1A shows a schematic drawing of a system 10, an apparatus 100, a manufacturing facility 200, a computer-readable medium CRM and a first step and a second step of a method according to the present disclosure. As is shown in Fig. 1A (and also all other figures), the apparatus 100 may be a stand-alone server, a (dedicated) circuit, a fully software-based algorithm or any other implementation suitably for executing the present disclosure. Likewise, as is shown in Fig. 1A (and also all other figures), the manufacturing facility 200 is a production plant, a production cell, a process or any other implementation suitable for executing the present disclosure.

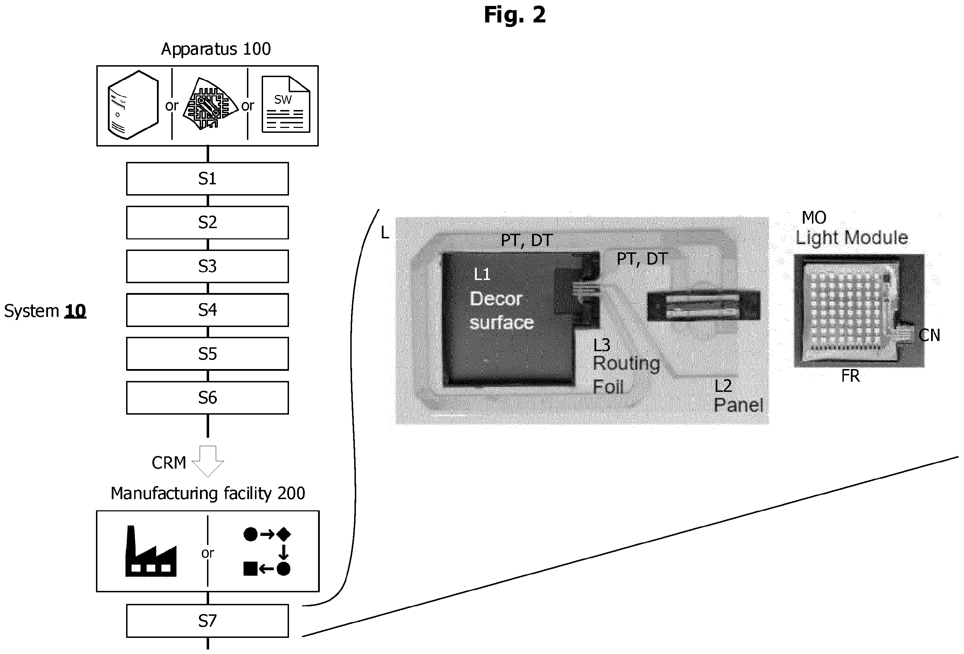

As is shown in Figs. 1A to 1C and Fig. 2, the method aims at generating, according to an input specification, a layout of a laminated panel L comprising a first layer L1 providing a cover function, a second layer L2 providing a support function and a third layer L3 providing a routing function PT, DT.

As is shown in Fig. 1A, the method comprises the step of selecting S1 a mounting surface MS to be equipped with at least one electrical function EF, wherein the first layer L1 is a part of the mounting surface MS. Without loss of generality, step S1 may be summarized in that it relates to a selection of a mounting part including the mounting surface (e.g. customer specific decor surface) MS, which should be equipped with the printed electrics, e.g. a ceiling panel, a sidewall, a monument wall, a lining, a partition wall, etc..

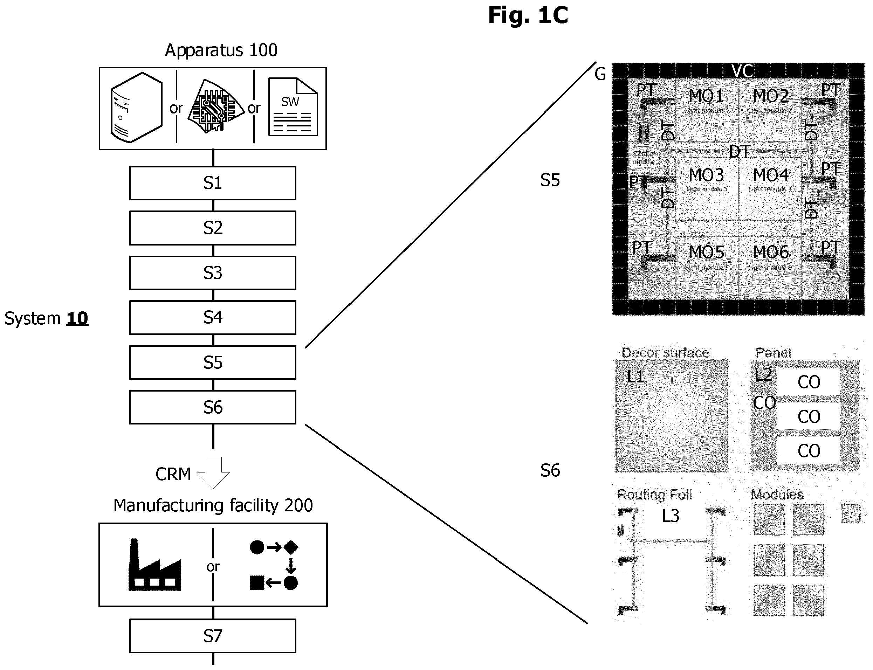

The method further comprises the step of superimposing S2, onto the selected mounting surface MS, a grid G signifying at least one virtual interface VI and at least one virtual constraint VC for the at least one electrical function EF. Without loss of generality, the superimposing step S2 may be summarized in that the grid G is displayed on top of the mounting part, wherein black areas (Fig. 1C) cannot be used due to a virtual constraint VC (due to e.g. a physical structural constraint) and dark grey areas show the virtual interfaces VI (due to e.g. physical interface points e.g. to the vehicle/aircraft systems); not all interface points are necessarily coverable by electrical functions EF e.g. because of other constraints, such as a maximum threshold of power consumption or data capacity of a physical system underlying the mounting surface MS being reached.

In this regard, the at least one virtual interface VI preferably relates to at least one physical interface (e.g. related to a power/data circuit/interface beneath the mounting surface MS). Moreover, the at least one virtual constraint VC preferably relates to physical areas unsuitable for the at least one electrical function EF (e.g. because of a rack or carrier beneath the mounting surface, because of security-related aspects, etc.).

As hinted at above, the mounting surface preferably is a lining or ceiling panel, and most preferably a lining or ceiling panel in an aircraft. In this way, the lining or ceiling panel itself is functionalized in advance rather than installing functions e.g. after mounting the ceiling panel, thus saving on both installation costs and panel weight.

As is shown in Figs. 1A to 1C and Fig. 2, the present disclosure provides the apparatus 100 for generating, according to an input specification, the layout of the laminated panel L (shown in Fig. 2 in greater detail) comprising the first to third layers L1, L2, L3, the apparatus 100 being configured to perform all steps of the method especially concerning steps S1, S2 (described above) and S3 to S6 (described herein below).

As is also seen in Figs. 1A to 1C and Fig. 2, the present disclosure provides a computer-readable medium CRM comprising code portions which, when executed on a processor (e.g. of a general-purpose computer, not shown), configure the processor to perform the steps of the method of the present disclosure. In particular, the computer-readable medium CRM may serve for conveying the generated layout (see Fig. 1C described herein below for further details) from the apparatus 100 to the manufacturing facility 200. The computer-readable medium CRM may be any non-transitory medium (such as a diskette, a CD-ROM, a USB-Stick or the like) as well as any transitory medium (such as a direct/relayed signal transmission e.g. via directional radio, involving also 2G/3G/4G/5G technologies, or an upload/download e.g. via the Internet). Notably, provision of the computer-readable medium CRM does not preclude that the apparatus and the manufacturing facility 200 are co-located in the same entity, such as a production cell/line being directly programmable e.g. via a handheld device.

As is also seen in Figs. 1A to 1C and Fig. 2, the present disclosure provides the system 10 for manufacturing, according to the input specification, a laminated panel L comprising the first to third layers L1, L2, L3. The system comprises the apparatus 100 and the manufacturing facility 200 for manufacturing the laminated panel L according to the present disclosure. As hinted at above, the system 10 may be distributed (e.g. online or in real-time, such as a remote process control via the Internet, or offline via a transfer medium, such as the computer-readable medium CRM) or concentrated (e.g. a central controller at the production site, controlling one or more of the apparatuses 100 or the above-described directly programmable production cell/line).

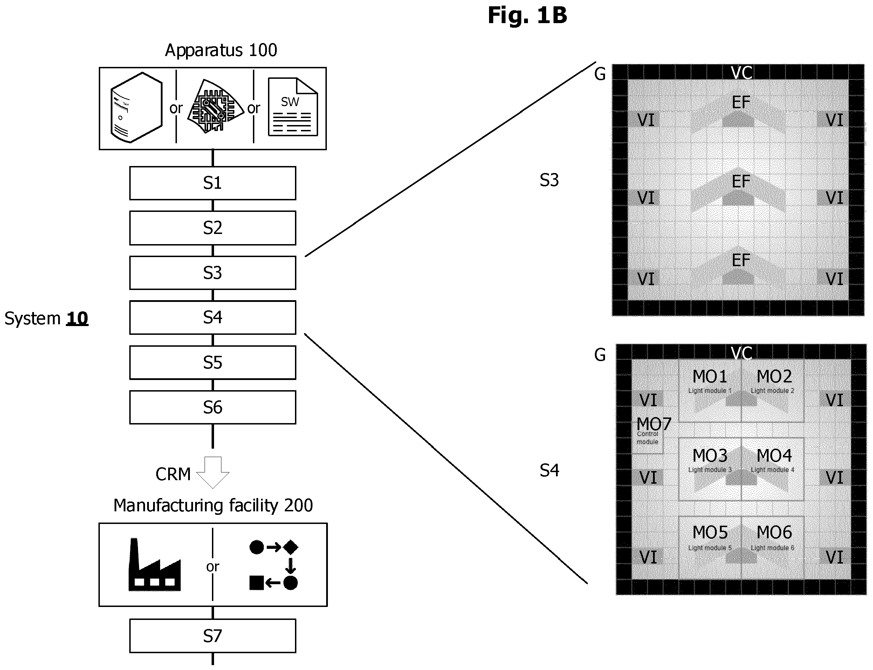

Fig. 1B shows a schematic drawing of the system 10, the apparatus 100, the manufacturing facility 200, the computer-readable medium CRM and a third step and a fourth step of the method according to the present disclosure.

As is seen in Fig. 1B, the method further comprises the step of receiving S3 the input specification to select and place the at least one electrical function EF on the superimposed grid EF. Without loss of generality, the step of receiving S3 may be described in that electrical functions EF, like lights, sensors or antennas, will be selected and placed at a desired spot. Notably, while the electrical functions EF are preferably placed on the virtual interfaces VI, the received input specification may "misplace" the electrical function EF (e.g. in the region depicted in light grey) also elsewhere in the mounting area MS as long as the virtual constraints VC are not violated, e.g. because the electrical function EF has no need for power tracks PT described herein below, as it is/will be buffered e.g. by a physical battery, or is a wireless communication device (including RFID technology).

Moreover, the method further comprises the step of transferring S4 the at least one selected and placed electrical function EF into one or more modules MO, MO1, MO2, MO3, MO4, MO5, MO6, MO7 to be placed on the grid G. Without loss of generality, the step of transferring S4 may be described in that, after consistency and structural checks, the selected electrical functions EF will be transferred into modules MO; a standardized shape may be placed along the grid G; one electrical function EF can be divided into multiple modules MO; a standard control module MO7 may be placed in an open slot to manage the whole system, if necessary.

In this regard, as hinted at above, the transferring step S4 preferably further comprises checking the selected and placed electrical function for structure and consistency. Resuming the above-described example of the "misplaced" electrical function EF (that was not placed on a virtual interface VI), the apparatus 100 may e.g. issue some direct form of warning via a user interface of the apparatus/ configurator 100 or may e.g. make an entry in some form of log file for later inspection.

Still further, the at least one electrical function EF preferably relates to at least one of a light, a sensor and an antenna. In this way, the underlying mounting surface MS (such as the ceiling panel) can become an intelligent component e.g. in a distributed control/monitoring system.

Fig. 1C shows a schematic drawing of the system 10, the apparatus 100, the manufacturing facility 200, the computer-readable medium CR and a fifth step and a sixth step of the method according to the present disclosure.

The method further comprises the step of connecting S5 the one or more modules MO with the routing function PT, DT. Without loss of generality, the step of connecting S5 may be described in that all modules MO will be connected to a power and data bus, i.e., power tracks PT (depicted in dark grey) and data tracks DT (depicted in medium grey). In other words, the routing function preferably pertains to power tracks PT and data tracks DT to connect the one or more modules MO. In addition, the routing function can further including connecting the standard control module MO7 to the power tracks PT and/or data tracks DT.

Finally, the method further comprises the step of generating S6 the layout comprising manufacturing specifications for the first, second and third layers L1, L2, L3. Without loss of generality, the step of generating S6 may be described in that all single manufacturing parts are defined: the first layer L1, e.g. the decor surface, the second layer L2, e.g. panel(s) with cavities/cut-outs CO, the third layer L3, e.g. as a routing foil, and the electrical modules MO.

In this regard, in the generating step S6, the layout for the third layer L3 is preferably generated according to the power tracks PT and data tracks DT determined above. Still further, also in the generating step S6, the layout for the second layer L2 is generated involving the cut-outs CO for the at least one or more modules MO, as described above.

Fig. 2 shows a schematic drawing of a laminated panel L, the system 10, the apparatus 100, the manufacturing facility 200, the computer-readable medium CRM and a seventh step of the method according to the present disclosure.

That is, the method of the present disclosure is preferably further for manufacturing the laminated panel L, and the method preferably further comprises the step of manufacturing S7 the laminated panel L according to the manufacturing specifications (as provided by the layout from step S6 e.g. via the computer-readable medium CRM, as described herein above).

Accordingly, pursuant to the present disclosure, there is provided a laminated panel L, comprising the first layer L1 providing a cover function, wherein the first layer L1 is a part of a mounting surface MS to be equipped (such as the "decor surface" shown from the back side in Fig. 2), the second layer L2 providing the cut-outs CO to support the one or more modules MO, MO1, MO2, MO3, MO4, MO5, MO6, MO7, and the third layer L3 providing the power tracks PT and data tracks DT to connect the one or more modules. In the sense of a product-by-process, the laminated panel L was manufactured by the above-described method of the present disclosure.

Moreover, the second layer is preferably comprised of a reinforced foam layer. In this way, structural integrity of the resulting laminated panel L can be ascertained, e.g. in a case where the underlying mounting surface MS cannot or may not directly carry the routing layer L2 and the modules MO.

Finally, each of the one or more modules MO is preferably equipped with a frame FR to be mounted in the cut-outs CO of the second layer L2, and a connector CN to establish an electrical connection to the power tracks and data tracks of the second layer. In this way, modularity of the laminated panel L as a whole is ascertained; for instance, it is not necessary that all layers L1, L2, L2 and modules are manufactured at the same manufacturing facility 200 - it may be more economical to provide e.g. a separate production line per layer L1, L2, L3 and to package the layers L1, L2, L3 to the laminated panel L at a later stage.

It is believed that the advantages of the technique presented herein will be fully understood from the foregoing description, and it will be apparent that various changes may be made in the form, constructions and arrangement of the exemplary aspects thereof without departing from the scope of the present disclosure or without sacrificing all of its advantageous effects. Because the technique presented herein can be varied in many ways, it will be recognized that the present disclosure should be limited only by the scope of the claims that follow.

## Claims

1. A method for generating, according to an input specification, a layout of a laminated panel (L) comprising a first layer (L1) providing a cover function, a second layer (L2) providing a support function and a third layer (L3) providing a routing function (PT, DT), the method comprising the steps of:
selecting (S1) a mounting surface (MS) to be equipped with at least one electrical function (EF), wherein the first layer is a part of the mounting surface;
superimposing (S2), onto the selected mounting surface, a grid (G) signifying at least one virtual interface (VI) and at least one virtual constraint (VC) for the at least one electrical function;
receiving (S3) the input specification to select and place the at least one electrical function on the superimposed grid;
transferring (S4) the at least one selected and placed electrical function into one or more modules (MO, MO1, MO2, MO3, MO4, MO5, MO6, MO7) to be placed on the grid;
connecting (S5) the one or more modules with the routing function; and
generating (S6) the layout comprising manufacturing specifications for the first, second and third layers.

2. The method of claim 1, wherein:
the transferring step further comprises checking the selected and placed electrical function for structure and consistency.

3. The method of claim 1 or 2, wherein:
the routing function pertains to power tracks (PT) and data tracks (DT) to connect the one or more modules.

4. The method of claim 3, wherein:
in the generating step, the layout for the third layer is generated according to the power tracks and data tracks.

5. The method of any one of the preceding claims, wherein:
the at least one virtual interface relates to at least one physical interface; and
the at least one virtual constraint relates to physical areas unsuitable for the at least one electrical function.

6. The method of any one of the preceding claims, wherein:
in the generating step, the layout for the second layer is generated involving cut-outs (CO) for the at least one or more modules.

7. The method of any one of the preceding claims, wherein:
the at least one electrical function relates to at least one of a light, a sensor and an antenna.

8. The method of any one of the preceding claims, wherein:
the mounting surface is a ceiling panel, preferably in an aircraft.

9. The method of any one of the preceding claims, wherein:
the method is further for manufacturing the laminated panel, and
the method further comprises the step of manufacturing (S7) the laminated panel according to the manufacturing specifications .

10. A computer-readable medium (CRM) comprising code portions which, when executed on a processor, configure the processor to perform the steps of a method according to any one of the preceding method claims.

11. A laminated panel (L), comprising:
a first layer (L1) providing cover function, wherein the first layer is a part of a mounting surface (MS) to be equipped;
a second layer (L2) providing cut-outs (CO) to support one or more modules (MO, MO1, MO2, MO3, MO4, MO5, MO6, MO7); and
a third layer (L3) providing power tracks (PT) and data tracks (DT) to connect the one or more modules,
wherein the laminated panel was manufactured by a method according to claims 3, 6 and 9.

12. The laminated panel of claim 11, wherein:
the second layer is comprised of a reinforced foam layer.

13. The laminated panel of claim 11 or 12, wherein:
each of the one or more modules is equipped with:
- a frame (FR) to be mounted in the cut-outs of the second layer, and
- a connector (CN) to establish an electrical connection to the power tracks and data tracks of the second layer.

14. An apparatus (100) for generating, according to an input specification, a layout of a laminated panel (L) comprising a first layer (L1) providing a cover function, a second layer (L2) providing a support function and a third layer (L3) providing a routing function, the apparatus being configured to perform all steps of a method according to any one of claims 1 to 8.

15. A system (10) for manufacturing, according to an input specification, a laminated panel (L) comprising a first layer (L1) providing a cover function, a second layer (L2) providing a support function and a third layer (L3) providing a routing function, the system comprising:
an apparatus (100) according to claim 14; and
a manufacturing facility (200) for manufacturing the laminated panel, the manufacturing facility being configured to perform the method of claim 9.
